(19)

**Europäisches Patentamt**

**European Patent Office**

**Office européen des brevets**

(11) Veröffentlichungsnummer: **0 501 099 B1**

(12) **EUROPÄISCHE PATENTSCHRIFT**

(45) Veröffentlichungstag der Patentschrift: **26.10.94**

(21) Anmeldenummer: **92100011.3**

(22) Anmeldetag: **02.01.92**

(51) Int. Cl.⁵: **G01G 19/12**, G01G 7/06, G01F 1/76

(54) **Vorrichtung zur Messung eines Massestromes mit einem Messkondensator.**

(30) Priorität: **25.02.91 DE 4105857**

(43) Veröffentlichungstag der Anmeldung:
**02.09.92 Patentblatt 92/36**

(45) Bekanntmachung des Hinweises auf die
Patenterteilung:
**26.10.94 Patentblatt 94/43**

(84) Benannte Vertragsstaaten:
**BE DE DK FR GB IT**

(56) Entgegenhaltungen:
**EP-A- 0 208 025**
**WO-A-85/00087**
**DE-A- 1 942 773**
**DE-B- 2 106 970**

(73) Patentinhaber: **CLAAS OHG**
**Postfach 11 40**
**D-33426 Harsewinkel (DE)**

(72) Erfinder: **Horn, Klaus, Prof. Dr.-Ing.**
**Vosskuhle 2**
**D-3300 Braunschweig (DE)**
Erfinder: **Weigelt, Horst, Dr.-Ing.**
**Kardinal-von-Galen Strasse 17**
**D-4830 Gütersloh (DE)**
Erfinder: **Böttinger, Stefan, Dipl.-Ing.**
**Rigaer Strasse 2**
**D-4803 Steinhagen (DE)**

(74) Vertreter: **Hanewinkel, Lorenz, Dipl.-Phys.**
**Patentanwalt**
**Ferrariweg 17a**
**D-33102 Paderborn (DE)**

**Beschreibung**

Die Erfindung betrifft eine Vorrichtung zur Messung eines Massestromes von Objekten mit einer zu ihrer Umgebung unterschiedlichen Dielektrizitätskonstanten, insb. von Schüttgut, wobei der Massestrom einen Meßkondensator durchströmt, dessen durchlaufende Messung bestimmter Kondensatorkapazitätswerte mit einem weiteren, laufend gewonnenen Meßwert jeweils verknüpft ist.

Aus DE-21 06 970 A1 ist eine Vorrichtung bekannt, bei der mehrere Masseströme von Erntegzut, nämlich Getreidekörner, quasikontinuierlich durch zugeordnete Kondensatoren hindurchgeleitet werden, deren Kapazitäten laufend gemessen und zueinander ins Verhältnis gesetzt werden, so daß das gebildete Kapazitätenverhältnis jeweils ein relatives, qualitatives Maß für das Verhältnis der beiden Körnerströme zueinander ist. Die Körner fallen dabei in loser undefinierter räumlicher Verteilung durch die Kondensatoren hindurch; deshalb gibt der jeweilige Kapazitätswert nur ein qualitatives aber kein reproduzierbares quantitatives Maß für den Körnerstrom wieder, da sich die Meßobjekte abhängig von ihrer relativen Lage im elektrischen Meßfeld zueinander feldmäßig und somit meßsignalmäßig unterschiedlich beeinflussen. Außerdem ist diese Vorrichtung nicht geeignet, absolute Meßwerte für die Masseströme zu liefertn, da deren kapazitive Feldbeeinflussung stark von den Materialeigenschaften, z.B. der Feuchtigkeit, der relativen Dielektrizitätskonstante, des elektrischen Leitwertes, insbesondere aber der Dichte des Meßgutes, abhängig ist. Weiterhin weisen die Kondensatoren der bekannten Vorrichtung stark inhomogene Feldverteilungen auf, was weitere Meßungenauigkeiten mit sich bringt.

Weiterhin ist aus DE OS 19 42 773 eine Vorrichtung bekannt, bei der in einem Teilbereich eines Kondensators ein Getreidekörnerstrom angestaut wird, der quasikontinuierlich durch eine gesteuerte Entleerung des Kondensatormeßraumes abgeführt wurde. Aus der Kondensatorkapazität wurde die Stauhöhe und somit das Stauvolumen bestimmt, aus dem in Verbindung mit der Entladehäufigkeit ein Körner-Volumenstrom ermittelt wurde. Diese Vorrichtung ist nur für relativ langsam fließende Körnerströme geeignet, und für die Entleerung ist ein platzaufwendiges Zellrad oder ein im Entladezeitraum eine Meßungenauigkeit hervorrufende, mechanisch zu betätigende Entladeklappe erforderlich.

Weiterhin ist aus EP 0 208 025 A1 ein Massestrommmesser für hohe Durhsätze bekannt, bei dem ein durch einen Aufzug geförderter Massestrom in einem Rohrbogen abgelenkt wird, an dem eine kontinuierlich arbeitende Wägevorrichtung angeordnet ist, die die durch die bogenförmige Ablenkung am Rohrbogen auftretende Kraft mißt, die ein Maß für den Massestrom ist. Die Meßgenauigkeit ist jedoch zum einen von einer genauen Einhaltung der Fördergeschwindigkeit abhängig und zum weiteren von dem Reibungsbeiwert des Rohrbogens in Bezug auf die jeweiligen Körner. Da dieser Beiwert stark feuchtigkeits- und reifegradabhängig ist und die Förderung mit einem Löffelbagger quasikontinuierlich erfolgt, ist nur eine geringe Meßgenauigkeit zu erreichen.

Es ist Aufgabe der Erfindung, die eingangs beschriebene Vorrichtung zur kapazitiven Messung eines Massestromes, insbes. von Körnergut, so zu verbessern, daß sie für hohe Durchsätze geeignet ist und bei relativ einfachem Aufbau eine hohe Genauigkeit und absolute Meßwerte liefert.

Die Lösung der Aufgabe besteht darin, daß der Massestrom so durch den Meßkondensator geleitet ist, daß er ein geschichtetes Dielektrikum mit einer annähernd homogenen Geschwindkeitsverteilung bildet und der weitere Meßwert ein Geschwindigkeitssignal des Massestromes ist.

In einer vorteilhaften Ausgestaltung wird der Massestrom so durch einen ersten Meßkondensator geleitet, daß er ein geschichtetes Dielektrikum mit einer annähernd homogenen Geschwindigkeitsverteilung bildet, und so durch einen zweiten Meßkondenstor geführt, daß dieser einen größeren Massezustrom als einen Masseabfluß aufweist, so daß es überlaufend stets ganz gefüllt ist. Die beiden Kapazitäten der Meßkondensatoren werden mit der gleichen Meßvorrichtung ermittelt, um ein Kapazitätenverhältnis zu bilden. Die laufende Absolutwertmessung eines Körnerstromes in Erntemaschinen erbringt erhebliche Vorteile bei der Nutzung des Meßwertes zur Regelung und Überwachung des Betriebes der Maschine, insbes. der Vorschubgeschwindigkeit, der Siebantriebe und der Schnitthöhe, und sie erlaubt die Erstellung eines Erntekatasters, das eine Grundlage für eine sich über Jahre erstreckende systematische, dem jeweiligen Boden- und Ertragswerten angepaßte, Bodenbearbeitung und Düngung ist.

Das neuartige Prinzip, nach dem die Vorrichtung arbeitet, nämlich daß die beiden Medien unterschiedlicher Dielektrizitätskonstante, also zum Beispiel die Luft und die Körnerschüttung, weitgehend getrennt voneinander, aber geschichtet durch den Meßkondensator geführt werden, beruht auf der Erkenntnis, daß nur so ein eindeutiger Zusammenhang zwischen dem Mengenverhältnis der beiden Medien im Kondensatorfeld und der Kapzität gegeben ist. Die Vorrichtung ist somit sowohl für die Messung von Strömen fließfähigen Feststoffgutes der verschiedensten Art in einem gasförmigen oder flüssigen Medium geeignet, als auch für eine Verteilungsmessung einer Dispersion von Gasblasen oder Flüssigkeitstropfen in einer Flüssigkeit mit einer anderen Dielektrizitätskonstanten.

2

Die für die Messung der Mengenverhältnisse der verschiedenen Medien erforderliche Schichtung derselben in dem Kondensatorbereich erfolgt entweder nur über die Einwirkung der Gravitation über eine längere schräge Rutschstrecke oder zusätzlich über die Trägheitskraft der Massepartikel bei einer Richtungsablenkung des Massestromes, wodurch sowohl die erforderliche Baulänge der Vorrichtung gering gehalten werden kann und eine intensive Durchmischung des Stromes erfolgt, so daß er über seinen Querschnitt eine weitgehend homogene Geschwindigkeitsverteilung erlangt, die eine der Voraussetzungen für eine aussagefähige Messung ist.

Eine vorteilhafte Ausgestaltung der Meßvorrichtung in Verbindung mit einer Erntemaschine besteht darin, daß hinter dem Getreideelevator, z.B. dem Löffelbagger, ein Bahnkrümmer angeordnet ist, in dem eine Durchmischung der Körner, die auf verschiedenen Bahnradien ausgeworfen werden und dabei verschiedene Geschwindigkeit haben, erfolgt und wodurch die Zentrifugalkraft, die an der gebogenen Wandung auftritt, eine Verdichtung des Körnerstromes und eine Geschwindigkeitshomogenisierung bewirkt. Die glatte Führungsbahn und der vergleichmäßigte Körnerfluß schließt eine Beschädigung des empfindlichen Erntegutes aus. Aus der Meßstrecke wird der Körnerstrom im wesentlichen ungebremst in ein Silo weiterbefördert; nur ein Teilstrom wird dabei durch eine Vergleichskondensatormeßkammer geführt, die stetig entleert wird und stets bis zum Überlauf gefüllt gehalten ist.

Für die Kapazitätsvergleichsmessung eignen sich verschiedene Schaltungsanordnungen, bei denen vorteilhaft stets die gleiche Meßvorrichtung zur Messung beider Kapazitäten dient, so daß systematische Fehler sich weitgehend kompensieren.

Eine erste Meßanordnung ist durch eine Trägerfrequenz Meßbrücke gekennzeichnet, deren Eingang alternativ auf die beiden zu messenden Kapazitäten umgeschaltet wird und deren zugehörigen Meßergebnisse miteinander in einem Rechner verglichen werden.

Eine weitere vereinfachte Schaltungsanordnung besteht darin, daß die beiden zu vergleichenden Kapazitäten als Brückenglieder in eine Trägerfrequenzbrücke geschaltet werden, so daß das Brückenausgangssignal ein Maß zur Bestimmung des Kapazitätsverhältnisses ist.

Eine andere sehr einfache Art der Kapazitäten-Verhältnismessung ist in einer Schaltung angewandt, in der eine Kapazitätsaufladung der Kapazitäten mit einer Stromquelle alternierend bis zu einer Vergleichsspannung vorgenommen wird, wobei die jeweils erforderlichen Ladezeiten der beiden Meßkondensatoren gemessen werden, die dann zu vergleichen sind.

Eine besonders schnelle und genaue Messung erbringt eine weitere Schaltungsanordnung, bei der die beiden zu vergleichenden Kapazitäten in den Zweigen einer Brückenschaltung angeordnet sind. Dabei erfolgt eine unmittelbare Vehältnisbildung, die dann noch nach dem bekannten funktionalen Zusammenhang der Brückenschaltung auf das Kapazitätenverhältnis zurückzuführen ist, was durch eine einfache Formelberechnung oder Tabellenzuordnung erfolgen kann. Diese funktionale Transformation läßt sich mit der ohnehin notwendigen funktionalen Verknüpfung des Kapazitätenverhälnisses mit der Funktion des geschichteten Dieelektrikums kombinieren, so daß jeweils nur eine gemeinsame Verarbeitung eines Meßergebnisses durch einen Tabellenzugriff oder eine Funktionsberechnung erforderlich ist.

In einer vorteilhaften Ausführung einer Brückenmeßschaltung, die beide Meßkondensatoren in einem Meßzweig enthält, ist diese mit einer alternierenden Brückenspannung gespeist, die jeweils dann die Polarität wechselt, wenn jeweils ein oberer oder ein unterer vorgegebener Toleranzpunkt des Brückenabgleiches erreicht ist, wobei die jeweiligen Zeiten der beiden geschalteten Polaritäten gemessen werden, die dann ins Verhältnis gesetzt werden, woraus sich das Brückenverhältnis ergibt.

Um möglichst genaue Meßergebnisse zu erzielen, ist die eine der Meßelektroden jedes Meßkondensators mit einer Schutzelektrode umgeben, die dem Potential der Meßelektrode elektronisch nachgeführt ist. Durch eine geeignete Ausbildung der Schutzelektrode in bekannter Weise wird gewährleistet, daß in dem Meßfeld ein annähernd paralleler Feldlinienverlauf gegeben ist. Dadurch ergibt sich eine eindeutige funktionale Beziehung zwischen der Schichtungshöhe des zu messenden Dielektrikums und der Kapazität. Diese eindeutige Beziehung dient der Umrechnung des jeweils originär gewonnen Verhältniswertes.

Vorteilhafte Ausführungsformen sind anhand der Figuren 1 bis 8 dargestellt.

Fig. 1 zeigt einen Ausschnitt eines Vertikalschnittes eine Meßkondensatorenanordnung mit einer ersten Meßschaltung.

Fig. 2 zeigt eine weitere Meßschaltung, bei der die Meßkondensatoren in einen Brückenzweig gelegt sind.

Fig. 3 zeigt eine dritte Meßschaltung mit einem Rampenintegrator und einem Digitalisierungszähler.

Fig. 4 zeigt eine vierte Meßschaltung mit einer Brückenanordnung der Meßkondensatoren.

Fig. 5 - 7 zeigen weitere Meßkondensatoranordnungen.

Fig. 8 zeigt den Kapazitätseinfluß Feuchte in Weizen.

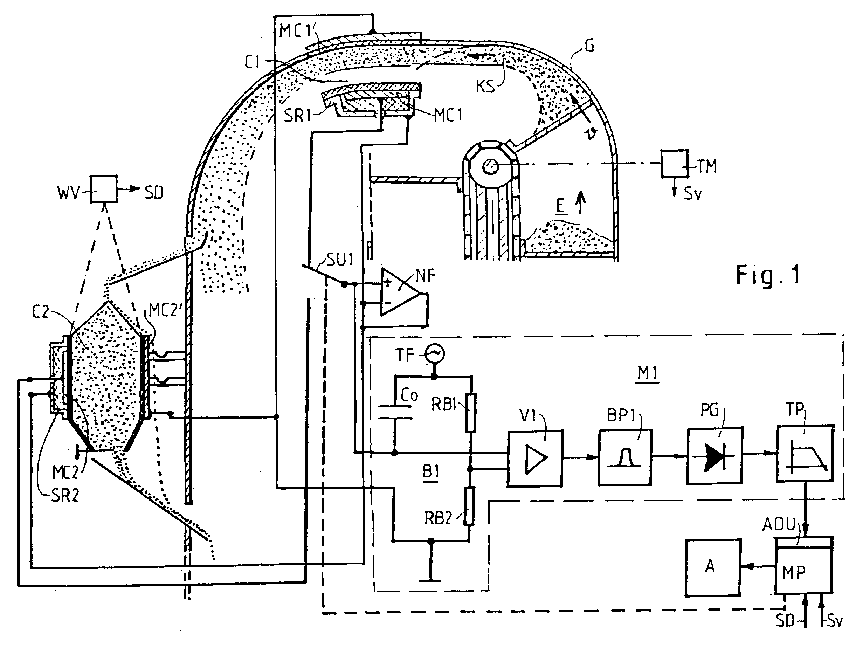

Fig. 1 zeigt den oberen Teil eines Getreidelevators (E), dessen Gehäuse (G) eine Ablenkung des endseitig herausgeschleuderten Körnerstromes (KS) in den ersten Meßkondensator (C1) bewirkt, so daß der Körnerstrom (KS) darin ein geschichtetes Dielektrikum quer zu dem Feldlinienverlauf bildet. Der Kondensator (C1) ist von einer Schutzringelektrode (SR1) umgeben, die mit dem Meßbelag (MC1) potentialmäßig mitgeführt ist. Die Gegenelektrode (MC1') kann isoliert angeordnet oder auch geerdet sein, je nach der angeschlossenen Meßanordnung.

Abstromseitig ist in dem Körnerstrom ein zweiter Meßkondensator (C2) angeordnet, der einen so geringen unteren Auslauf aufweist, daß er im kontinuierlichen Betrieb stets bis zum Überlaufen mit Körnern gefüllt ist. Auch bei diesem Kondensator (C2) ist die Meßelektrode (MC2) mit einer Schutzringelektrode (SR2) umgeben. Die Bezugselektrode (MC2') ist mit der Bezugselektrode (MC1') elektrisch verbunden oder gemeinsam geerdet. Die beiden Schutzringelektroden (SR1, SR2) sind elektrisch miteinander verbunden, so daß nur ein Impedanzwandler als ein Potentialnachführungsverstärker (NF) erforderlich ist.

Am Antrieb des Elevators (E) ist ein Tachometer (TM) angeordnet, der ein Meßsignal (Sv) der mittleren Körnerstromgeschwindigkeit (v) signalisiert.

Eine erste Kapazitäten-Meßvorrichtung (M1) ist über einen steuerbaren Umschalter (SU1) wechselweise an die Meßelektroden (MC1, MC2) der beiden Meßkondensatoren (C1, C2) angeschlossen, die jeweils in einem Ast einer Brückenschaltung (B1) liegen, in deren anderen Ästen ein Standardkondensator (Co) und zwei Brückenwiderstände (RB1, RB2) liegen. Die Brücke (B1) ist von einem Trägerfrequenzoszillator (TF) gespeist, und in der anderen Diagonalen mit einem Verstärker (V1) beschaltet, dessen Ausgangssignal nacheinander einen Bandpaß (BP1), einen phasenselektiven Gleichrichter (PG) und danach einen Tiefpaß (TP) durchläuft, dessen Ausgangssignal, das abhängig von der Umschalterstellung das Brückenmeßsignal der einen oder anderen Meßkapazität repräsentiert, einem Auswerteprozessor (MP) zugeführt ist, der den Umschalterstellungen zeitlich zugeordnet dieses Signal in einem Analog-Digitalumsetzer (ADU) digital umsetzt. Die so gewonnenen Kapazitätsbrückenmeßwerte werden dann brückenfunktionsmäßig umgeformt und programmgemäß ins Verhältnis gesetzt. Dieses wird der funktionalen Verknüpfung gemäß des Kapazitätsverlaufes eines geschichteten Dielektrikums transformiert, so daß das relative Massenverhältnis in den beiden Meßkondensatoren sich ergibt. Dieses Massenverhältnis wird mit dem jeweiligen Wert des Geschwindigkeitssignals (Sv) und einem vorgegebenen, spezifischen Dichtewert (SD) mulitpliziert, wodurch sich der Massestromwert (MSW) ergibt, der einer Anzeigevorrichtung (A) direkt oder über einen Integrator (I) zugeführt wird.

Das Signal (Sv) des Geschwindigkeitssensors entspricht einer mittleren Geschwindigkeit der Körner, die beim Übergang der Elevatorschaufeln aus der Hubbewegung in die Drehbewegung mit dem Abstand von der Wendeachse zunimmt. Da die Körner durch ihre Zentrifugalkraft nach außen getrieben werden, interagieren sie derart durch Stoß, daß sie eine mittlere Geschwindigkeit (v) geringer Streubreite annehmen.

Da die Funktionen der Schichtung und Homogenisierung des Körnerstromes nur in einem bestimmten Geschwindigkeitsbereich gewährleistet ist, überwacht der Auswerteprozessor (MP) die Einhaltung dieses zulässigen Geschwindigkeitsbereiches durch periodische Vergleiche des Geschwindigkeitssignalwertes (Sv) mit einem oberen und einem unteren Grenzwert, bei deren Über- bzw. Unterschreitung er eine Alarmmeldung ausgibt.

Der Dichtewert (SG), der u.a. feuchtigkeitsabhängig ist, kann von Zeit zu Zeit ermittelt und in den Auswerteprozessor (MP) eingegeben werden, oder er wird mittels einer Wägezelle laufend gravimetrisch bestimmt und dem Prozessor (MP) kontinuierlich zugeführt. Beispielsweise eignet sich der Meßkondensator (C2) als Wägezelle, wenn er in einer Waagevorrichtung (WV) angeordnet ist. Das Wägesignal wird einer Mittelwertbildung über solche Zeiträume unterzogen, daß Schwankungen, die durch Erschütterungen infolge der Fahrt der Erntemaschine auftreten, ausgeglichen werden.

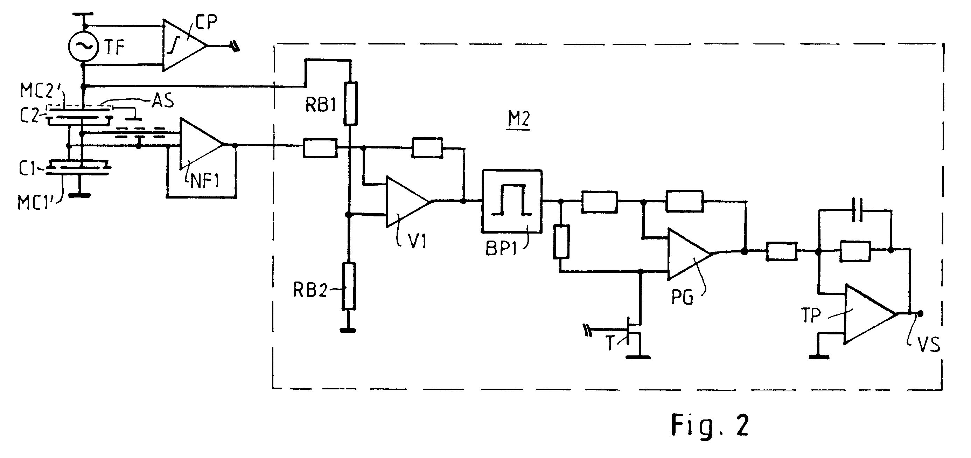

Fig. 2 zeigt eine besondere Ausgestaltung einer Meßschaltung (H2), bei der ein Umschalter entfällt und die beiden ins Verhältnis zu setzenden Kapazitäten (C1, C2) in zwei benachbarten Brückenzweig angeordnet sind. Die Bezugselektrode (MC1') des ersten Meßkondensators (C1) liegt an Massepotential, so daß die Elevatorwandung als Elektrode dient. Die Bezugselektrode (MC2') des anderen Kondensators (C2) ist mit dem Trägerfrequenzgenerator (TF) verbunden; diese Elektrode (MC2') ist zweckmäßig mit einer Abschirmung (AS) umgeben, die mit der Schutzelektrode (SR) oder mit Masse verbunden ist.

Die beiden Meßelektroden der Meßkondensatoren (C1, C2) sind mit dem Eingang des Impedanzwandlers (NF1) verbunden, der die Schutzringe und Zuleitungsabschirmung speist. Vom Ausgang des Impedanzwandlers (NF1) ist das Signal auf den Brückenverstärker (V1) geführt, dessen anderer Eingang an dem Widerstandsbrückenzweig (RB1, RB2) angeschlossen ist. Das verstärkte Brückensignal wird über den Bandpaß (BP1) dem phasenselektiven Gleichrichter (PG) zugeführt, der andererseits über einen Komparator (CP) mit der Trägerfrequenz mittels eines Schalttranssistors (T) gesteuert ist. Dem phasengesteuerten Gleichrichter ist eine Tiefpaßschaltung (TP) nachgeschaltet, die als ein mit einem Hochpaß gegengekoppelter Verstärker ausgebildet ist, dessen Ausgangssignal (VS) dem Auswerteprozessor zugeführt wird, das unmittelbar einer Brückenfunktion des Kapazitätenverhältnisses repräsentiert, das über die Brückenfunktionsformel und die Funktion des geschichteten Dielektrikums in einen relativen Füllungsgrad des ersten Meßkondensators (C1) umzusetzen ist, woraus durch Multiplikationen mit dem Gechwindigkeitswert der Körnerstrom und weiter mit dem Dichtewert der Massestrom zu bestimmen sind, der dann durch eine Integration in die in dem jeweiligen Integrationszeitraum durchgelaufene Gesamtmasse zu überführen ist.

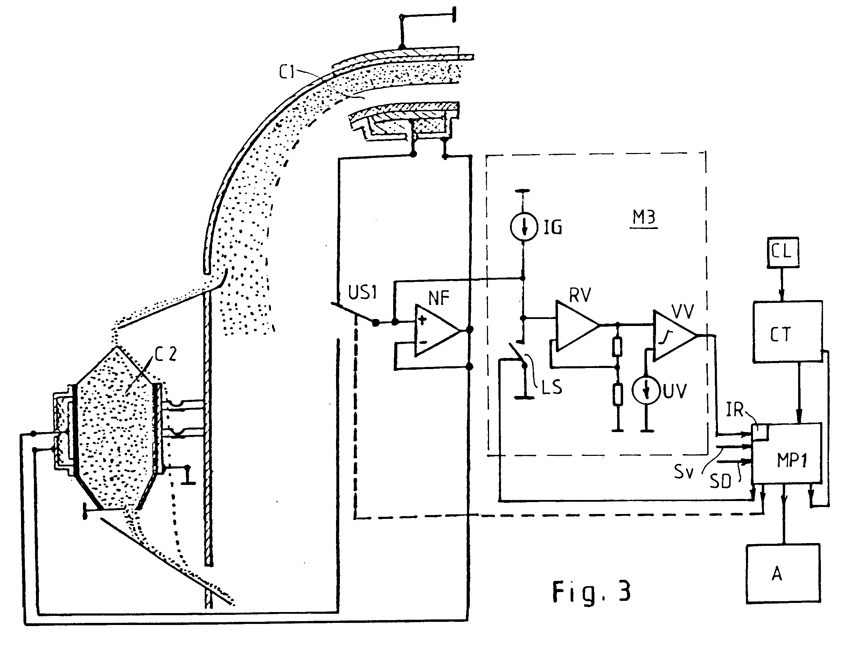

Fig. 3 zeigt eine weitere Meßschaltung (M3), die bei einfachem Aufbau eine Digitalisierung der Kapazitätswerte der beiden Meßkondensatoren (C1, C2) erbringt.

Die Meßelektroden sind mit Schutzringen umgeben, die an den Impedanzwandler (NF) angeschlossen sind. Die Referenzelektroden der Meßkondensatoren sind über einen Umschalter (US1) wahlweise gesteuert mit dem Eingang der Meßschaltung (M3) verbunden. Dieser wird von einer Stromquelle (IG) gespeist und führt auf einen Rampensignalverstärker (RV), dessen Ausgang auf einen Vergleicher (VV) führt, dessen anderer Eingang mit einer Vergleichsspannung (UV) gespeist ist.

Der Auswerteprozessor (MP1) ist eingangsseitig mit einem Ausgang eines Zählers (CT) verbunden, der von Taktsignalen (CL) laufend am Zählereingang beaufschlagt ist. Der Ausgang des Vergleichers (VV) steuert jeweils dann, wenn die Rampenspannung der Vergleichsspannung (UV) entspricht, einen Interrupteingang (IR) des Auswerteprozessors (MP1) an. Dieser steuert daraufhin über einen Löschtransistor (LS) eine Entladung der Meßkapazität, die Verbringung des Umschalters (US1) in die jeweils andere Stellung, die Übernahme des Zählerinhalts in einen internen Speicher und ein Rücksetzen (RS) des Zählers (CT). Auf die gleiche Weise wird beim nächsten Erreichen der Vergleichsspannung (UV) ein weiterer Zählerstand in einen anderen internen Speicher übernommen, worauf jeweils die beiden gwonnenen Zählerstände, die den beiden Kapazitätswerten unmittelbar entsprechen, ins Verhältnis gesetzt werden. Der errechnete Verhältniswert wird dann der Funktion des geschichteten Dielektrikums gemäß weiterverarbeitet und dann mit dem Geschwindigkeitswert (Sv) und dem Dichtewert (SD) verknüpft, so daß sich jeweils der Massestrom ergibt.

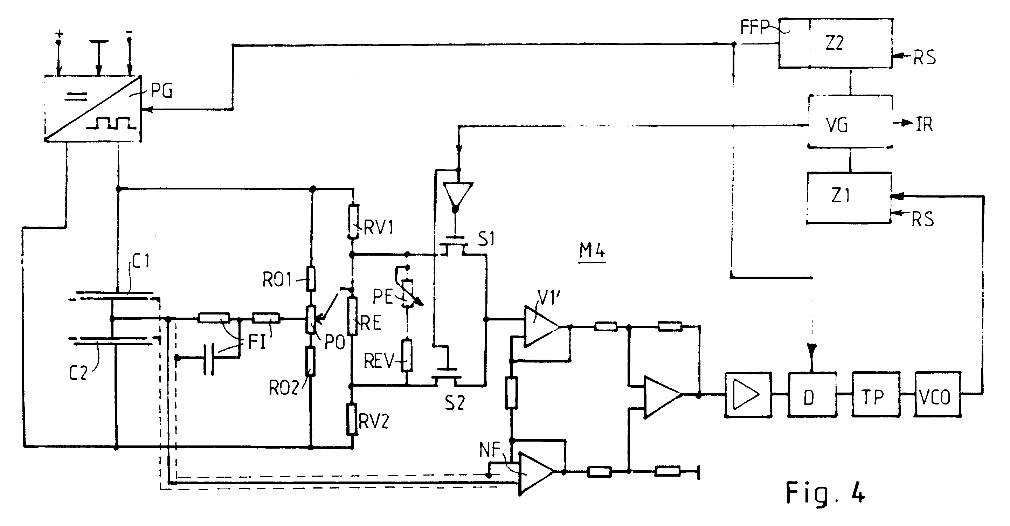

Fig. 4 zeigt eine weitere Meßschaltung (M4) bei der die Meßkondenstoren (C1, C2) mit einem Widerstandsnetzwerk (RO1, PO, RO2; RV1, RE, RV2; PE, REV) in einer Brückenschaltung angeordnet sind, die von einer in ihrem Impulsbreitenverhältnis steuerbaren Impulsgenerator (PG) gespeist ist. Die Meßelektroden der Meßkondensatoren (C1, C2) sind zusammengeschaltet und von Schutzringelektroden eingefaßt, die von dem Impedanzwandler (NF) mit dem Potential der Meßelektroden versorgt sind. Dieser ist außerdem über eine hochohmige Filterschaltung (FI) mit dem Widerstandsbrückenpunkt verbunden, wodurch eine Gleichspannungsüberlastung des Brückenverstärkers (V1') durch Leckströme vermieden wird. Da der Spannungsteilerstützpunkt ebenso wie die Abschirmung der Zuleitung zu den Meßelektroden über den Trennkondensator der Filterschaltung wechselstrommäßig dem Meßelektrodenpotential nachgeführt wird, ist die effektive Belastung in der Meßdiagonalen der Brückenschaltung durch diesen Spannungsteiler selbst bei sehr kleinen Aufnahmekapazitäten von wenigen Pikofarad vernachlässigbar klein.

Das Brückenpotentiometer (PO) dient dem Mittelpunktabgleich des Arbeitspunktes der Verstärkerschaltung. Der in dem zweiten Widerstandszweig (RV1, RE, RV2) enthaltene mittlere Widerstand (RE) bestimmt im Verhältnis zu den beiden anderen Widerständen den Arbeitsbereich der Schaltung in Verbindung mit der parallelen Potentiometerschaltung (PE, REV), durch die die Bereichsweite in Grenzen einstellbar ist.

Die Endpunkte des Bereichswiderstandes (RE) sind über wechselseitig geöffnet bzw. geschlossen gesteuerte elektronische Schalter (S1, S2) an den Verstärker (V1') geführt, der andererseits mit dem Signal der Meßelektroden beschaltet ist, und dessen Ausgangssignal über einen Demodulator (D), einen Tiefpaß (TP) einen spannungsgesteuerten Oszillator (VCO) beaufschlagt, der einen ersten Zähler (Z1) einer Zeitteilerschaltung zählend beaufschlagt. Ein weiterer Zähler (Z2) der Zeitteilerschaltung ist von einem Testfrequenzgenerator (FFP) ständig zählend beaufschlagt, der außerdem den Demodulaotr (D) und den Pulsgenerator (PG) steuert. Die beiden Zählerstände der Zähler (Z1, Z2) werden laufend in einem Vergleicher (VG) verglichen, dessen Ausgang abhängig vom Vergleichsergebnis jeweils den einen oder anderen der Schalter (S1, S2) aufsteuert. Mit jeder Umsteuerung wird ein Interruptsignal (IR) an den Auswerteprozessor abgegeben, der dann die Zählerstände übernimmt und löscht. Aus den aufeinanderfolgend übernommenen Zählerständen ergeben sich die jeweiligen Kapazitätenverhältnisse gemäß der Brückenfunktion, die dann, wie bei den anderen Beispielen beschrieben, ausgewertet werden.

Diese Art der Schaltung ermöglicht eine sehr hohe zeitliche Auflösung von Schwankungen im Körnerstrom, so daß sogar beim Durchlauf einer Elevatorschaufel ein detailliertes Masseprofil durch häufiges Messen gewonnen werden kann. Aus diesen Meßwerten wird ein Mittelwert durch Integration der einzelnen Durchflußwerte über zahlreiche Schaufeldurchläufe gebildet, und dann der Mittelwert angezeigt oder weiterverwertet.

Es liegt im Rahmen des fachmännischen Könnens, Kombinationen aus den dargestellten Schaltungen nach Zweckmäßigkeit zu bilden.

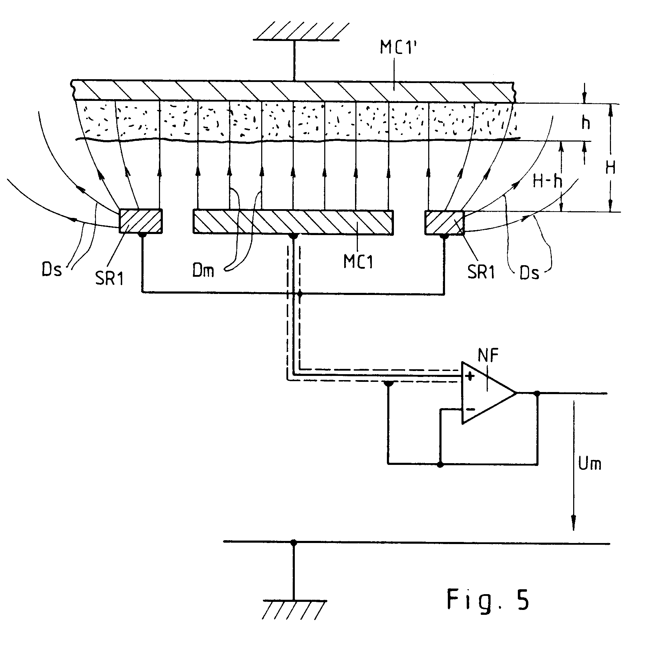

In Fig. 5, die ein Detail aus Fig. 1 zeigt, ist im Elevatorkopf eine Meßstrecke aufgebaut, bei der unter dem Einfluß von Fliehkräften an der Außenwand eine in ihrer Schichthöhe durchsatzproportionale Schichtung des Körnerstroms festzustellen ist. Die auf diese Weise entstandene Körnerschicht bildet mit der angrenzenden Luftschicht das geschichtete Dielektrikum eines Plattenkondensators, der aus der mit einem Schutzring (SR1) versehenen Meßelektrode (MC1) und aus der auf Massepotential liegenden Gegenelektrode (MC1') besteht. Bei dieser Anordnung ist bei entsprechender geometrischer Dimensionierung der Breite der Schutzringelektrode und der Meßelektrode (MC1) vor letzterer ein weitgehend homogenes elektrisches Feld ausbildet, das eine hochgradig definierte, näherungsweise lineare, elektrisch meßtechnische Erfassung der Schichthöhe des Körnerstroms garantiert. Unter der Annahme, daß das elektrische Feld quer zur Stromrichtung der Körner unendlich ausgedehnen sei; d.h., daß seitlich keine Elektrodenwandungen eine Potentialbegrenzung vornehmen würden, bilden sich die unvermeidlichen Feldinhomogenitäten nur vor der Schutzringelektrode (SR1) aus. Sie lassen sich so in sehr einfacher Weise durch eine Potentialnachführung mittels des Impedanzwandlers (NF) problemlos aus der Kapazitätserfassung eliminieren. Es ist vorteilhaft vorgesehen, daß die Schutzringelektrode (SR1) durch den Impedanzwandler (NF) bis auf eine Fehlerspannung von maximal 1 µV ständig exakt der am Meßkondensator (MC1) anliegenden Meßspannung (Um) nachgeführt ist, vor dem sich eine homogene Feldverteilung für die Verschiebungsstromdichtelinien (Dm) ergibt. Des weiteren ist in der Figur 5 erkennbar, daß die inhomogenen Verschiebungsstromdichtelinien (Ds) ohne jeden relevanten Einfluß auf die Ausbildung der Meßspannung (Um) bleiben.

Da die elektrischen Feldlinien den Verschiebungsstromdichtelinien (Dm) streng parallel sind, ergibt sich für die beiden Schichten des Dielektrikums mit der Körnerschichtdicke (h) und der Luftschichtdicke (H-h) und den zugehörigen gemittelten elektrischen Feldstärken (E) nach der Beziehung

$$\frac{E_{H-h}}{E_h} = \frac{Epsilon_K}{Epsilon_L} \quad \text{etwa gleich} \quad Epsilon_{rK}$$

eine relative Dielektrizitätskonstante (Epsilon$_{rK}$) gemäß den Formeln für geschichtete Dielektrika, wobei die Indizes K für Körner und L für Luft verwandt sind. Eine kapazitive Bestimmung der Körnerschichthöhe (h) ist damit leicht möglich, da diese näherungsweise ausschließlich von der relativen Dielektrizitätskonstante der Köner bestimmt wird.

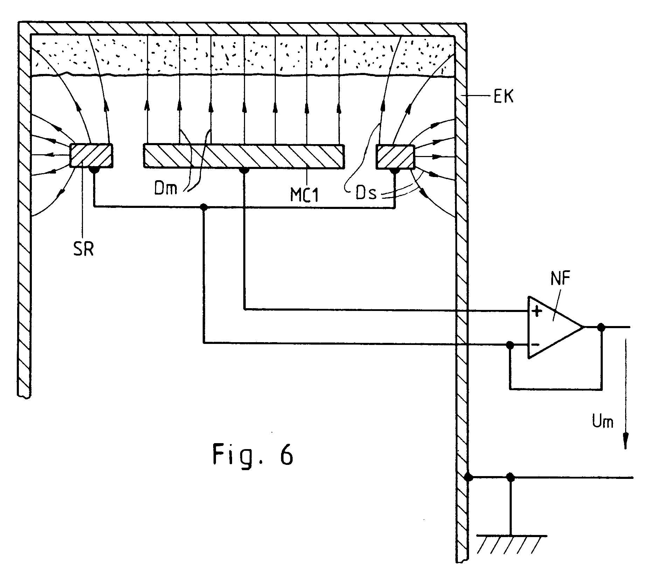

Eine weitere Anordnung der Meßelektrode (MC1) zeigt Fig. 6, die die seitliche Begrenzung durch ein auf Massepotential liegende Einhüllung (EK) berücksichtigt. Dort ist eine Verteilung der Verschiebungsstromdichtelinien (Dm, Ds) gegeben, wie sie durch deren Feldlinien qualitativ dargestellt ist. Man kann diesem Bild entnehmen, daß auch, wenn die seitliche Feldbegrenzung durch eine näherungsweise kastenförmig ausgebildete Einhüllung (EK) des Meßraumes besteht, sich ein näherungsweise homogenes Feld vor der Meßelektrode (MC1) ergibt. Insofern besteht zwischen den Anordnungen gemäß Fig. 5 und Fig. 6 kein grundsätzlicher Unterschied, da auch hier die inhomogenen Zonen durch den Impedanzwandler (NF) in Verbindung mit der Schutzring-Elektrode (SR) von der Kapazitätserfassung ausgeschlossen werden.

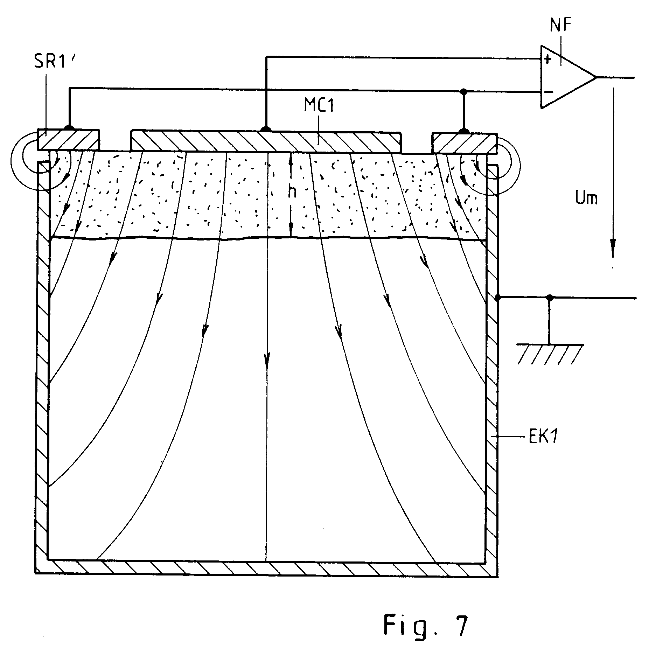

Fig. 7 zeigt eine besonders vorteilhafte Meßelektrodenanordnung. Bei dieser ist zur Vereinfachung die Kopfwandung direkt durch die Meßelektrode (MC1) sowie die seitlich begrenzenden Schutzringelektroden (SR1) ersetzt. Eine gesonderte Gegenelektrode entfällt, da die umgebenden Gehäuse- und Elevatorteile (EK1) diese unmittelbar bilden. Dadurch ist der Elevatorbereich frei von Meßbauteilen. Wie der Fig. 7 außerdem zu entnehmen ist, ist zwar der Verlauf der Verschiebungsstromdichtelinien vor der Meßelektrode nicht ganz homogen, sondern geringfügig gekrümmt; die wesentlichen Krümmungen dieser Feldlinien liegen jedoch in der Luftschicht der Meßstrecke, die an die Körnerschicht angrenzt. Die dortige Feldinhomogenität beeinflußt die Meßgenauigkeit praktisch nicht. Die Randzonen unterhalb der Schutzringelektroden (SR1') sind wie bei den anderen Elektrodenanodnungen nach Fig. 5 und 6 auch innerhalb der Körnerschicht inhomogen; aber mit Hilfe des Impedanzwandlers (NF) wird der Einfluß dieser Inhomogenitätszonen auf die Ausbildung der Meßspannung (Um) durch die Spannungsnachführung vollständig eliminiert.

Die näherungsweise homogene Feldverteilung innerhalb der Körnerschicht ist unmittelbar unterhalb der Meßelektrode (MC1) gegeben. Praktische Untersuchungen haben gezeigt, daß bei geeigneter Dimensionierung der Breite der Schutzringelektroden (SR1'), deren zur Gegenelektrode gerichtete Oberfläche beispielsweise größenmäßig etwa 1/4 bis 1/2 der aktiven Meßelektrodenoberfläche entspricht, der Kennlinienverlauf von der Meßspannung (Um) über der Körnerschichtdicke (h) mit dem entsprechenden Kennlinienverlauf von einer Anordnung gemäß Fig. 6 nahezu vollständig übereinstimmt. Lediglich der Meßeffekt ist um einige Prozent geringer, wenn die Gesamtanordnung gleiche Abmessungen aufweist.

Der zweite Meßkondensator (C2) läßt sich außer in einem ständigen Teilmassestrom auch in einem periodisch zu entleerenden Vorratstank anordnen, falls das Schüttgut über einen entsprechend langen Zeitraum bezüglich seiner kapazitiven gleichartig Eigenschaft ist. Bei einer derartigen Anordnung ist durch eine Vorabprüfung des Kapazitätsmeßwertes festzustellen, ob der Meßkondensator bereits gefüllt ist, d.h. der Vorratsbehälter schon entsprechend der Lage des Meßkondensators teilweise gefüllt ist, da bis zu diesem Zeitpunkt der Kondensator eine feste vorbekannte Anfangskapazität aufweist, die durch des Dielektrikum Luft bestimmt ist. Bei dem Kapazitätenvergleich mit dem Meßkondensator mit dem geschichteten Dielektrikum wird vorab, solange der zweite Meßkondensator noch nicht gefüllt ist, der Massestrom unter Berücksichtigung erfahrungsgemäßer Eichwerte der kapazitiven Eigenschaften für das gegebene Schüttgut näherungsweise bestimmt. Sobald der Meßkondensator in dem Vorratsbehälter gefüllt ist, und der aktuelle materialspezifische Vergleichswert der Kapazität vorliegt, was durch einen Vergleich des Kapazitätswertes auf seine zeitlich annähernde Konstanz und bei Überschreitung eines vorgegebenen Kapazitätsschwellwertes jeweils festgestellt wird, erfolgt die automatische Berücksichtigung der kapazitiven Materialeigenschaft. Darüberhinaus werden die vorher gemessenen und erfahrungsgemäß näherungsweise bestimmten Massewerte, die zwischengespeichert worden sind, entsprechend dem gemessenen kapazitiven Materialbeiwert korrigiert.

Die Messung der Kapazität des vollständig gefüllten zweiten Kondensators wird weiterhin vorteilhaft dazu genutzt, gemäß einer Eichfunktion, die den Zusammenhang des Feuchtigkeitsgehaltes des Schüttgutes in Abhängkeit von der gemessenen Kapazität angibt, die jeweilige Feuchtigkeit des Meßgutes zu bestimmen und durch eine Anzeige oder einen Ausdruck auszugeben. Ebenso wie die Feuchtikeit eines Schüttgutes läßt sich auch von einem anders zusammengestzten Zweistoffgemisch die relative Zusammensetzung ermitteln, wenn die Dielektrizitätskonstanten der beiden Stoffe verschieden ist und die demgemäße Eichkurve des Kondensators bezüglich der Stoffgemische vorliegt. Voraussetzung ist dabei, daß das Zweistoffgemish homogen ist, da ansonsten kein eindeutiger Funktionszusammenhang des Mischungsverhältnisses zur Kapazität besteht. In Erntemaschinen läßt sich dieses Meßverfahren für die Bewertung eines Mischfruchterntegutes verwenden.

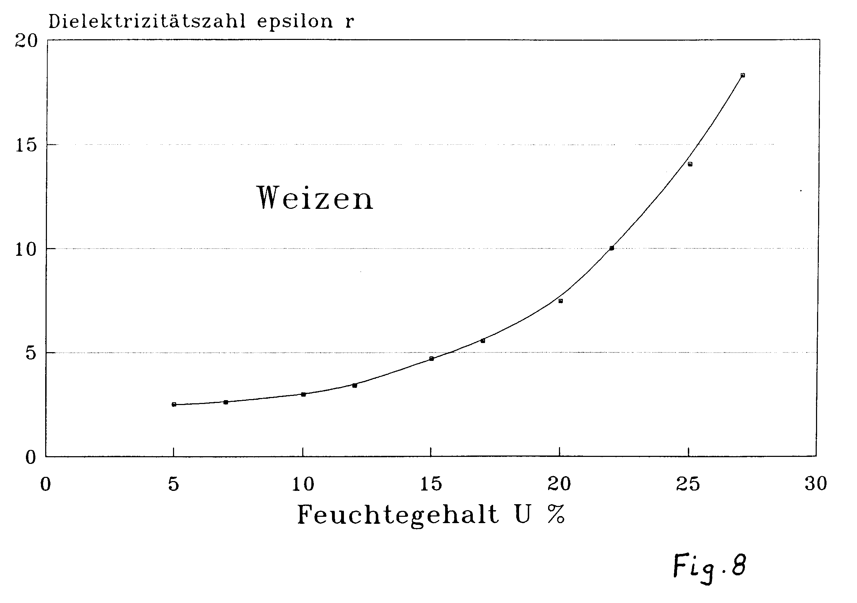

Den funktionalen Zusammenhang der Dielektrizitätskonstanten Epsilon abhängig von dem Feuchtegehalt U für Weizen zeigt die Fig. 8. Derartige funktionale Zusammenhänge finden sich in Kutzbach: Lehrbuch der Agrartechnik Bd.1, Allgemeine Grundlagen, Ackerschlepper, Fördertechnik, Hamburg (DE) 1989 Seite 106. Für andere Materialien lassen sich entsprechende Funktionen des Kapazitätszusammenhanges des Meßkondensators von den Stoffeigenschaften bzw. -zusammensetzungen ermitteln. Die Umrechnung der gemessenen Kapazitätswerte läßt sich über Tabellenzugriffe und evtl. eine Interpolation zwischen den gespeicherten Werten leicht vornehmen. Somit läßt sich mit der dargestellten Funktion die Feuchtigkeit aus den Kapazitätenverhältnissen ermitteln, die sich aus der Kapazität des jeweils gefüllten Kondensators und einer einmaligen Messung der Kapazität mit völlig trockenem Gut der gleichen Art ermitteln.

Erfindungsgemäße Meßvorrichtungen lassen sich sowohl in dem Haupterntegutstrom anordnen als auch in Nebenströmen, z.B. des einlaufenden Schnittgutes als auch in der Strohbahn.

Auch andere Erntemaschinen als Mähdrescher, z.B. Stroh-, Gras- oder Maishächsler oder Hau-, Strohoder Grasaufnehmer lassen sich mit einer derartigen Meßvorrichtung bestücken.

Der Zweite Meßkondensator, der vollständig gefüllt gehalten wird, läßt sich vorteilhaft als ein Zylinderkondensator ausgestalten, wodurch nur geringe Randzonenbereiche mit inhomogener Feldverteilung gegeben sind.

Um eine Verfälschung der Kapazitätsmessung durch einen ohmschen Leitungsanteil zu vermeiden, sind die Oberflächen der Meßelektroden und ggf. der Schutzringe mit einer abriebfesten isolierenden Beschichtung versehen.

## Patentansprüche

1.  Vorrichtung zur Messung eines Massestromes von Objekten mit einer zu ihrer Umgebung unterschiedlichen Dielektrizitätskonstanten, insbesondere von Schüttgut, wobei der Massestrom einen Meßkondensator (C1) durchströmt, dessen durchlaufende Messung bestimmter Kondensatorkapazitätswerte mit einem weiteren, laufend gewonnenen Meßwert jeweils verknüpft ist,

    dadurch gekennzeichnet, daß der Massestrom so durch den Meßkondensator (C1) geleitet ist, daß er ein geschichtetes Dielektrikum mit einer annähernd homogenen Geschwindigkeitsverteilung bildet und der weitere Meßwert ein Geschwindigkeitssignal (Sv) des Massestromes ist.

2. Vorrichtung nach Anspruch 1, dadurch gekennzeichnet, daß der Massestrom am Ausgang eines Elevators (E) an einer Gehäusewandung (G) umgelenkt wird, so daß er das geschwindigkeitshomogen, geschichtete Dielektrikum in dem dort angeordneten Meßkondensator (C1) bildet, dessen einer Kondensatorbelag (MC1, MC1') beabstandet zum Massestrom angeordnet ist.

3. Vorrichtung nach Anspruch 1 oder 2, dadurch gekennzeichnet, daß der Massestrom einem zweiten Meßkondensator (C2) derart zugeführt wird, daß der Massestrom größer als sein Masseabfluß ist, so daß der zweite Meßkondensator (C2) in einem kontinuierlichen Betrieb überlaufend ganz gefüllt ist, und daß die beiden Kapazitäten der beiden Meßkondensatoren (C1, C2) mit der gleichen Meßvorrichtung (M1, - M4) ermittelt werden und aus den beiden Kapazitätswerten ein Kapazitätenverhältnis gebildet wird, das einer Anzeige und/oder Weiterverarbeitung zugeleitet wird.

4. Vorrichtung nach Anspruch 3, dadurch gekennzeichnet, daß der zweite Meßkondensator (C2) in einem Schüttguttank angeordnet ist, dem der Massestrom zugeführt wird.

5. Vorrichtung nach Anspruch 4, dadurch gekennzeichnet, daß der zweite Meßkondensator (C2) aus einer Parallelschaltung mehrerer Meßkondensatoren besteht, die an unterschiedlichen Stellen in dem Schüttguttank angeordnet sind.

6. Vorrichtung nach Anspruch 4 oder 5, dadurch gekennzeichnet, daß der zweite Meßkondensator (C2) ein vertikaler Zylinderkondensator ist, der stirnseitig geöffnet ist.

7. Vorrichtung nach einem der Ansprüche 1 bis 6, dadurch gekennzeichnet, daß jeweils einer der Kondensatorbelege (MC1, MC2) mindestens eines der beiden Meßkondensatoren (C1, C2) mit jeweils einer Schutzringelektrode (SR, SR1, SR1', SR2) eingefaßt ist, die durch einen Impedanzwandler (NF) mit dem eingefaßten Kondensatorbeleg (MC1, MC2) auf gleichem Potential gehalten ist, so daß dieser ein annähernd homogenes elektrisches Meßfeld zum anderen Kondensatorbeleg (MC1', MC2') aufweist.

8. Vorrichtung nach Anspruch 7, dadurch gekennzeichnet, daß die Schutzringelektrode (SR) und die davon umgebene Meßelektrode (MC1) luftseitig des geschichteten Dielektrikums angeordnet sind und eine Einhüllung (EK) körnerseitig und seitlich die Gegenelektrode bilden.

9. Vorrichtung nach Anspruch 7, dadurch gekennzeichnet, daß die Schutzringelektrode (SR1') und die davon umgebene Meßelektrode (MC1) körnerseitig des geschichteten Dielektrikums angeordnet sind und die Gegenelektrode durch eine luftschichtseitige Einhüllung (EK1) gebildet ist.

10. Vorrichtung nach Anspruch 9, dadurch gekennzeichnet, daß die Schutzringelektrode (SR1') mindestens 1/4 der körnerseitigen Grenzflächen des Körnerstromes seitlich der Meßelektrode (MC1) symmetrisch bedeckt.

11. Vorrichtung nach einem der vorstehenden Ansprüche, dadurch gekennzeichnet, daß die beiden Meßkondensatoren (C1, C2) in einem Zeitraster über einen gesteuerten Umschalter (SU1) abwechselnd mit der Meßvorrichtung (M1) verbunden sind, die aus einer Brückenschaltung (B1) besteht, die mit einer Trägerfrequenz-Spannung (TF) gespeist ist und deren Ausgangssignal nacheinander über einen Verstärker (V1), einen Bandpaß (BP1), einen phasenselektiven Gleichrichter (PG), einen Tiefpaß (TP) und einen Analog-Digital-Umsetzer (ADU) einem Auswerteprozessor (MP) zugeführt ist, der in dem Zeitraster einen so gewonnenen jeweiligen Brückensignalwert übernimmt und jeweils zugeordnet zu dem jeweils ausgewählten Meßkondensator (C1, C2) speichert sowie einer Brückenfunktion gemäß die diesem Brückensignalwert jeweils zugehörige Kapazität bestimmt und aus dere Kapazitäten das Kapazitätenverhältnis jeweils ermittelt.

12. Vorrichtung nach einem der Ansprüche 1 bis 10, dadurch gekennzeichnet, daß die beiden Meßkondensatoren (C1, C2) einen Zweig einer frequenzgespeisten Brückenschaltung bilden, dessen anderer Zweig aus Widerständen (RB1, RB2) besteht und deren Ausgangssignal nacheinander über einen Verstärker (V1), einen Bandpaß (BP1) einen phasenselektiven Gleichrichter (PG) und einen Tiefpaß (TP) als ein Verhältnissignal (VS) einem Analog-Digitalwandler eines Auswerteprozessors zugeführt ist, der dessen Verhältnissignalwert periodisch abfragt und einer Brückenfunktion gemäß in das Kapazitätenverhältnis wandelt.

**13.** Vorrichtung nach einem der Ansprüche 1 bis 10, dadurch gekennzeichnet, daß die beiden Meßkondensatoren (C1, C2) über einen steuerbaren Umschalter (US1) alternierend mit einer Stromquelle (IG) sowie einem Rampenverstärker (RV) verbunden sind, dem ein Schwellwertdiskriminator (VV) nachgeschaltet ist, dessen Ausgangssignal jeweils, wenn das Rampenverstärkersignal eine vorgegebene Schwellspannung (UV) erreicht hat, unmittelbar oder mittelbar den jeweils angeschalteten Meßkondensator (C1, C2) über einen Löschschalter (LS) entlädt, den Umschalter (US1) in die jeweils andere Stellung verbringt, den jeweiligen Inhalt eines Zeitzählers (CT) in einen ersten Speicher eines Auswerteprozessors (MP1) überträgt und dann den Zeitzähler (CT) zurücksetzt, und daß dann, wenn das Rampenverstärker-Signal erneut die vorgegebene Schwellspannung (UV) erreicht hat, durch das Schwellwertdiskriminatorsignal der jeweilige Inhalt des Zeitzählers (CT) in einen zweiten Speicher des Auswerteprozessors (MP1) übernommen wird und dann aus den beiden genannten Zeitzählerinhalten das Kapazitätenverhältnis gebildet wird.

**14.** Vorrichtung nach einem der Ansprüche 1 bis 10, dadurch gekennzeichnet, daß die beiden Meßkondensatoren (C1, C2) einen ersten Zweig einer impulsgesteuerten Brückenschaltung bilden und ein Widerstandsnetzwerk (RO1, RPO, RV2; RV1, RE, RV2; PE, REV) den zweiten Brückenzweig bildet, das einen Bereichwiderstand (RE) enthält, dessen beide Enden umschaltbar mit dem einen Eingang eines Brückenverstärkers (V1') verbunden sind, dessen anderer Eingang mit dem anderen Brückenzweig verbunden ist, und dessen Ausgang über einen taktgesteuerten Demodulator (D) und einen Tiefpaß (TP) einem spannungsgesteuerten Oszillator (VCO) zugeführt ist, der einen ersten Zähler (Z1) einer Zeitteilerschaltung beaufschlagt, dessen Inhalt in einem Vergleicher (VG) mit einem Zählerinhalt eines festtaktgesteuerten zweiten Zählers (Z2) einer Zeitteilerschaltung verglichen wird, dessen Ausgang eine Eingangsumsteuerung sowie ein Auslesen der Zählerstände in einen Auswerteprozessor bewirkt, der aus den jeweils aufeinanderfolgenden Zählerständen unter Berücksichtigung einer Brückenfunktion jeweils das Kapazitätenverhältnis ermittelt.

**15.** Vorrichtung nach einem der vorstehenden Ansprüche, dadurch gekennzeichnet, daß der Auswerteprozessor (MP, MP1) das Kapazitätenverhältnis mit einer Kapazitätsfunktion des geschichteten Dielektrikums verknüpft und dadurch den Füllungsgrad des ersten Meßkondensators (C1) bestimmt, daß dem Auswerteprozessor (MP, MP1) das Geschwindigkeitssignal (Sv) und ein Dichtesignal (SD) zugeführt ist, mit denen der jeweils bestimmte Füllungsgrad multipliziert wird, wodurch ein jeweiliger Massestromwert gebildet ist, und daß die aufeinanderfolgend gebildeten Massestromwerte über zahlreiche Messungen gemittelt und zur Anzeige gebracht werden.

**16.** Vorrichtung nach Anspruch 15, dadurch gekennzeichnet, daß das Geschwindigkeitssignal (Sv) von einem Tachometer (TM) am Elevator (E) gewonnen wird und dieses von dem Auswerteprozessor (MP, MP1) auf eine Einhaltung eines vorgegebenen Toleranzbereiches überwacht wird, bei dessen Verlassen ein Alarm gemeldet wird.

**17.** Vorrichtung nach Anspruch 15, dadurch gekennzeichnet, daß der zweite Meßkondensator (C2) auch eine Wägezelle ist, die mit einer Wägevorrichtung (WV) verbunden ist, die das Dichtesignal (SD) abgibt.

**18.** Vorrichtung nach Anspruch 15, dadurch gekennzeichnet, daß die Brückensignalfunktion und die Kapazitätsfunktion des geschichteten Dielektrikums zu einer Funktion zusammengefaßt sind und so gemeinsam auf den Brückenverhältniswert angewandt werden, so daß dadurch der Füllungsgrad bestimmt ist.

**19.** Vorrichtung nach Anspruch 1, dadurch gekennzeichnet, daß der Massestrom einem Meßkondensator (C2) derart zugeführt wird, daß er überlaufend gefüllt ist und er von einem Teilmassestrom durchflossen ist, und die Kapazität des Meßkondensators (C2) von einer Meßvorrichtung ermittelt und so mit einer Kapazitäts-Feuchtigkeitsgehalts-Funktion oder mit einer Zweistoff-Verhältnis-Kapazitäts-Funktion verknüpft wird, daß ein Feuchtigkeitsgehalt oder ein Zweistoffverhältnis ermittelt wird, der oder das dann zu einer Anzeige gebracht wird.

**20.** Vorrichtung nach einem der vorstehenden Ansprüche, dadurch gekennzeichnet, daß mindestens eine der Meßelektroden (MC1, MC2) und ggf. dessen Schutzring (SR, SR1, SR2) mit einer abriebfesten Isolatorschicht massestromseitig beschichtet ist.

**Claims**

1. Device for measuring a mass flow in respect of objects having a different dielectric constant from their surroundings, more particularly of bulk material, where the mass flow passes through a measuring capacitor (C1) of which the continuous measurement of certain capacitor capacitance values is in each case combined with another measured value obtained routinely,
characterised in that the mass flow is conducted through the measuring capacitor (C1) in such a way that it forms a laminated dielectric with a more or less homogeneous velocity distribution and the other measured value is a velocity signal (Sv) of the mass flow.

2. Device according to claim 1, characterised in that the mass flow is diverted at the exit from an elevator (E) on one wall of a casing (G), with the result that it forms the laminated dielectric of homogeneous velocity in the measuring capacitor (C1) disposed there and of which one capacitor coating (MC1, MC1') is spaced apart from the mass flow.

3. Device according to claim 1 or 2, characterised in that the mass flow is passed to a second measuring capacitor (C2) in such a way that the mass flow is greater than its mass discharge, with the result that the second measuring capacitor (C2) is full to overflowing in continuous operation, and that both capacitances of the two measuring capacitors (C1, C2) are determined using the same measuring device (M1, - M4) and from the two capacitance values a capacitance ratio is formed which is sent to a display and/or for further processing.

4. Device according to claim 3, characterised in that the second measuring capacitor (C2) is arranged in a tank for bulk material, to which the mass flow is supplied.

5. Device according to claim 4, characterised in that the second measuring capacitor (C2) consists of a parallel connection of a plurality of measuring capacitors arranged at different points in the bulk material tank.

6. Device according to claim 4 or 5, characterised in that the second measuring capacitor (C2) is a vertical cylinder capacitor which is open at the front.

7. Device according to any of claims 1 to 6, characterised in that a respective one of the capacitor coatings (MC1, MC2) of at least one of the two measuring capacitors (C1, C2) in each case incorporates a guard-ring electrode (SR, SR1, SR1', SR2) which an impedance transformer (NF) keeps at the same potential as the incorporated capacitor coating (MC1, MC2), with the result that the latter exhibits an electrical measurement field more or less homogeneous with the other capacitor coating (MC1', MC2').

8. Device according to claim 7, characterised in that the guard-ring electrode (SR) and the test electrode (MC1) surrounded by it are arranged on the air side of the laminated dielectric, and form an envelope (EK) on the grain side and the counter electrode laterally.

9. Device according to claim 7, characterised in that the guard-ring electrode (SR1') and the test electrode (MC1) surrounded by it are arranged on the grain side of the laminated dielectric and the counter electrode is formed by an envelope (EK1) on the air-layer side.

10. Device according to claim 9, characterised in that the guard-ring electrode (SR1') symmetrically covers at least one-quarter of the grain-side boundary faces of the grain flow laterally of the test electrode (MC1).

11. Device according to any of the preceding claims, characterised in that the two measuring capacitors (C1, C2) are linked alternately to the measuring device (M1) via a controlled changeover switch (SU1) in a time slot pattern, said measuring device (M1) consisting of a bridge circuit (B1) supplied with a carrier-frequency voltage (TF) and its output signal sent successively via an amplifier (V1), a band-pass filter (BP1), a phase-selective rectifier (PG), a low-pass filter (TP) and an analogue-to-digital converter (ADU) to an evaluating processor (MP), which accepts a thus obtained respective bridging signal value in the time slot pattern and stores it, in each case assigned to the respective selected measuring capacitor (C1, C2), and decides the capacitance respectively associated with said bridging signal value in accordance with a bridging function and from the capacitances thereof respectively determines the capacitance ratio.

12. Device according to any of claims 1 to 10, characterised in that the two measuring capacitors (C1, C2) form one branch of a frequency-fed bridge, the other branch of which consists of resistors (RB1, RB2) and the output signal of which is sent in succession via an amplifier (V1), a band-pass filter (BP1), a phase-selective rectifier (PG) and a low-pass filter (TP) as a ratio signal (VS) to an analogue-to-digital converter of an evaluating processor, which periodically calls up the ratio signal value thereof and converts it to the capacitance ratio in accordance with a bridging function.

13. Device according to one of claims 1 to 10, characterised in that the two measuring capacitors (C1, C2) are linked via a controllable changeover switch (US1) alternately to a current source (IG) and to a ramp amplifier (RV) downstream of which is connected a threshold value discriminator (VV) whose output signal, whenever the ramp amplifier signal has reached a preset threshold voltage (UV), directly or indirectly discharges the respective linked-up measuring capacitor (C1, C2) via an erase switch (LS), moves the changeover switch (US1) to the respective other setting, transfers the respective content of a time counter (CT) into a first memory of an evaluating processor (MP1) and then resets the time counter (CT), and further characterised in that once the ramp amplifier signal has again reached the preset threshold voltage (UV), the threshold discriminator signal accepts the respective content of the time counter (CT) into a second memory of the evaluating processor (MP1) and then the capacitance ratio is formed from said two time counter contents.

14. Device according to any of claims 1 to 10, characterised in that the two measuring capacitors (C1, C2) form a first branch of an impulse-controlled bridge connection and a resistor network (RO1, RPO, RV2; RV1, RE, RV2; PE, REV) forms the second branch of the bridge, said network containing a range resistance (RE) of which both ends are reversibly connected to one input of a bridge amplifier (V1'), its other input being connected to the other branch of the bridge, and its output being sent via a timed demodulator (D) and a low-pass filter (TP) to a voltage-controlled oscillator (VCO) which acts on a first counter (Z1) of a time-division circuit whose content is compared in a comparator (VG) with the counter content of a fixed-timed second counter (Z2) of a time-division circuit, the output of which brings about reversal of an input and readout of the counts into an evaluating processor which determines the respective capacitance ratio from the respective consecutive counts, taking account of a bridge function.

15. Device according to any of the preceding claims, characterised in that the evaluating processor (MP, MP1) combines the capacitance ratio with a capacitance function of the laminated dielectric and thereby ascertains the filling level of the first measuring capacitor (C1), in that the velocity signal (Sv) and a density signal (SD) are sent to the evaluating processor (MP, MP1) and are multiplied by the respective ascertained filling level, thereby forming a respective mass flow value, and in that the successively formed mass flow values are averaged over a large number of measurements and displayed.

16. Device according to claim 15, characterised in that the velocity signal (Sv) is obtained from a tachometer (TM) on the elevator (E) and said signal is monitored by the evaluating processor (MP, MP1) to see that a preset tolerance range is observed, failing which an alarm is set off.

17. Device according to claim 15, characterised in that the second measuring capacitor (C2) is also a load cell which is linked to a weighing device (WV) which communicates the density signal (SD).

18. Device according to claim 15, characterised in that the bridge signal function and the capacitance function of the laminated dielectric are combined into one function and thus are applied jointly to the bridge ratio value, with the result that the filling level is ascertained.

19. Device according to claim 1, characterised in that the mass flow is sent to a measuring capacitor (C2) in such a way that the latter is filled to overflowing and a component mass flow flows through it, and the capacitance of the measuring capacitor (C2) is determined by a measuring device and thus combined with a capacitance/moisture content function or with a binary ratio capacitance function, and that a

11

moisture content or a binary ratio is determined which is then sent to a display.

**20.** Device according to any of the preceding claims, characterised in that at least one of the measuring electrodes (MC1, MC2), and if appropriate its guard ring (SR, SR1, SR2) is coated with a wear-resistant insulating layer on the side nearest the mass flow.

**Revendications**

**1.** Dispositif pour mesurer le débit massique d'objets ayant une constante diélectrique différente de celle de leur environnement, notamment des produits en vrac, le courant massique passant par un condensateur de mesure (C1), dont les mesurages continus de certaines valeurs de capacité sont liés, respectivement, à une autre valeur de mesure continuellement obtenue,
caractérisé en ce que
le courant massique est conduit à travers le condensateur de sorte qu'il forme un diélectrique à couches, avec une répartition de vitesse à peu près homogène et que l'autre valeur de mesure est un signal de vitesse (Sv) du courant massique.

**2.** Dispositif selon la revendication 1,
caractérisé en ce que
le courant massique à la sortie d'un élévateur (E) est dévié sur une paroi du boitier (G) de sorte qu'il forme le diélectrique à couches, de vitesse homogène, dans le condensateur de mesure (C1) y installé, dont l'une des lames (MC1, MC1') est disposée à distance par rapport au courant massique.

**3.** Dispositif selon la revendication 1 ou 2,
caractérisé en ce que
le courant massique est conduit à un deuxième condensateur de mesure (C2) de sorte que le courant massique est supérieur à son flux et que le deuxième condensateur de mesure (C2) est entièrement rempli, débordant, en service continu, et que les deux capacités des deux condensateurs de mesure (C1, 2) sont déterminées avec le même dispositif de mesure (M1 à M4) et qu'un rapport de capacitén est établi à partir des deux valeurs de capacité, lequel est affiché et/ou soumis à un traitement ultérieur.

**4.** Dispositif selon la revendication 3,
caractérisé en ce que
le deuxième condensateur de mesure (C2) est disposé dans un réservoir de produit en vrac, auquel le courant massique est conduit.

**5.** Dispositif selon la revendication 4,
caractérisé en ce que
que le deuxième condensateur de mesure consiste en un dispositif de commutation en parallèle de plusieurs condensateurs de mesure, disposés à différents endroits dans le produit en vrac.

**6.** Dispositif selon la revendication 4 ou 5,
caractérisé en ce que
le deuxième condensateur de mesure (C2) est un condensateur à cylindre vertical, ouvert frontalement.

**7.** Dispositif selon l'une des revendications 1 à 6,
caractérisé en ce que
l'une des lames (MC1, MC2) d'au moins l'un des deux condensateur (C1, C2) est sertie d'une électrode à anneau de garde (SR, SR1, SR1', SR2), qui est maintenu par un transformateur d'adaptation d'impédance (NF) au même potentiel que la lame de condensateur sertie, de sorte que celle-ci présente un champ de mesure électrique à peu près homogène par rapport à l'autre lame (MC1', MC2') de condensateur.

**8.** Dispositif selon la revendication 7,
caractérisé en ce que
l'électrode à anneau de garde (SR) et la lame (MC1) qu'elle entoure sont disposées du côté air du diélectrique à couches et forment une enveloppe (EK) du côté grains et latéralement par rapport à la contre-électrode.

**9.** Dispositif selon la revendication 7,
caractérisé en ce que
l'anneau de garde (SR1') et l'électrode de mesure (MC1) qu'il gaine sont disposés côté grains du diélectrique à couches et que la contre-électrode est formée par une enveloppe (EK1) côté couche d'air.

**10.** Dispositif selon la revendication 9,
caractérisé en ce que
l'électrode à anneau de garde (SR1') recouvre, symmétriquement, côté grains, au moins 1/4 de la surface limite du flux de grains, latéralement par rapport à l'électrode de mesure (MC1).

**11.** Dispositif selon l'une des revendications précédentes,
caractérisé en ce que
les deux condensateur de mesure (C1, C2) sont reliés alternativement, dans un système à tranches de temps, par l'intermédiaire d'un commutateur à commande (SU1), avec un dispositif de mesure (M1), qui consiste en un circuit en pont (B1), alimenté avec une tension à fréquence porteuse (TF) et dont les signaux de sortie sont conduits, successivement, par l'intermédiaire d'un amplificateur (V1), d'un passe-bande (BP1), d'un redresseur sélecteur de phase (PG), d'un dispositif passe-bas (TP) et d'un convertisseur analogique numérique (ADU) à un processeur d'évaluation (MP), qui prend en charge, dans le système à tranches de temps une valeur de signal en pont ainsi obtenue et la mémorise en l'affectant au condensateur de mesure (C1, C2) respectif et détermine , selon une fonction de pont, la capacité correspondant, respectivement, à cette valeur de signal et détermine la relation à partir de leurs capacités.

**12.** Dispositif selon l'une des revendications 1 à 10,
caractérisé en ce que
les deux condensateurs de mesure (C1, C2) forment une branche de circuit en pont alimenté en fréquence, dont l'autre branche consiste en résistances (RB1, RB2) et dont le signal de sortie est conduit, en tant que signal de rapport (VS), en passant sucessivement par un amplificateur (V1), un passe-bande (BP1), un redresseur sélecteur de phase (PG), d'un dispositif passe-bas (TP), à un convertisseur analogique numérique d'un processeur d'évaluation, qui en demande périodiquement la valeur de signal de rapport, et la convertit en rapport de capacités, conformément à une fonction de pont.

**13.** Dispositif selon l'une des revendications 1 à 10,
caractérisé en ce que
les deux condensateurs de mesure (C1, C2) sont reliés, alternativement, par l'intermédiaire d'un commutateur (US1) à commande, à une source de courant (IG), ainsi qu'à un amplificateur (RV), en aval duquel un avec un discriminateur de valeur seuil (VV) est connecté, dont le signal de sortie, chaque fois que le signal de l'amplificateur a atteint une tension seuil de consigne (UV), décharge, par l'intermédiaire d'un interrupteur d'accusé de réception, le condensateur de mesure (C1, C2) connecté, amène le commutateur (US1) dans l'autre position respective, transmet le contenu adéquat d'un compteur horaire (CT) dans une première mémoire d'un processeur d'évaluation (MP1), puis ramène le compteur horaire (CT) en arrière
et qu'ensuite,
quand la signal d'amplification a atteint de nouveau la tension seul de connsigne (UV), le contenu d'alors du compteur horaire (CT) est transféré dans une deuxième mémoire du processeur d'évaluation (MP1), par le signal du discriminateur de valeur de seuil, et que le rapport de capacité est alors formé à partir des deux contenus mentionnés du compteur horaire.

**14.** Dispositif selon l'une des revendications 1 à 10,
caractérisé en ce que
les deux condensateurs de mesure (C1, C2) forment une première branche d'un circuit en pont commandé par impulsions et qu'un réseau de résistance (RO1, RP0, RV2; RV1, RE, RV2; PE, REV) forme la deuxième branche du pont, comprenant une résistance série (RE), dont les deux extrémités sont reliées, commutables, avec l'une des entrées d'un amplificateur en pont (V1'), dont l'autre entrée est reliée à l'autre branche de pont, et dont la sortie est conduite, par l'intermédiaire d'un démodulateur (D) commandé par rythmeur et un dispositif passe-bas (TP), à un oscillateur (VCO), qui agit sur un premier compteur (Z1), dont le contenu est comparé, dans un comparateur (VG), avec le contenu d'un deuxième compteur (Z2), dont la sortie génère un renversement de commutation d'entrée ainsi que l'extraction des montants du compteur à destination d'un processeur d'évaluation, qui détermine chaque fois le rapport de capacités à partir des états de compteur successifs, compte tenu d'une fonction de pont.

**15.** Dispositif selon l'une des revendications précédentes,
caractérisé en ce que
le processeur d'évaluation (MP, MP1) enchaîne le rappport de capacités avec une fonction de capacité du diélectrique à couches et détermine ainsi le degré de remplissage du premier condensateur de mesure (C1),
que le signal de vitesse (Sv) et un signal de densité (SD) sont conduit au processeur d'évaluation (MP, MP1), signaux par lesquels le degré de remplissage déterminé est est multiplié, ce qui conduit à la formation d'une valeur de courant massique,
et que les valeurs de courant massique, formées successivement, sont déterminéees par de nombreux mesurages et affichées.

**16.** Dispositif selon la revendication 15,
caractérisé en ce que
le signal de vitesse (Sv) est obtenu à l'aide d'un tachymètre (TM), sur l'élévateur (E), et que le respect d'une plage de tolérance de consigne y relative est contrôlé, un signal d'alarme értant lancé quand celle-ci est dépassée.

**17.** Dispositif selon la revendication 15,
caractérisé en ce que
le deuxième condensateur de mesure (C2) est aussi une cabine de balance, qui est relié à un dispositif de pesage (WV) qui lance le signal de densité (SD).

**18.** Dispositif selon la revendication 15,
caractérisé en ce que
la fonction de signal de pont et la fonction de capacité du diélectrique en couches sont groupées en une fonction et appliquées ainsi dans la cadre de la valeur de rapport de sorte que le degré de remplissage peut être ainsi déterminé.

**19.** Dispositif selon la revendication 1,
caractérisé en ce que
le courant massique est conduit à un condensateur de mesure (C2) de sorte que celui-ci est rempli en débordement et est traversé par un courant massique partiel, et que la capacité du condensateur de mesure (C2) est découverte par un dispositif de mesure et est ainsi enchaînée avec une fonction de teneur d'humidité ou une fonction de capacité de rapport binaire, de sorte qu'une teneur en humidité ou un rapport binaire est déterminé, puis affiché.

**20.** Dispositif selon l'une des revendications précédentes,
caractérisé en ce que
l'une des électrodes de mesure (MC1, MC2), au moins, et, le cas échéant, son anneau de garde (SR, SR1. SR2) est/sont recouverte/s, côté courant massique, d'une couche isolante, résistante à l'abrasion.

Fig. 1

Fig. 2

Fig. 3

Fig. 4

Fig. 5

Fig. 6

Fig. 7

Dielektrizitätszahl epsilon r

Weizen

Feuchtegehalt U %

Fig. 8

EP 0 501 099 B1